# EUROPÄISCHE PATENTSCHRIFT

(11) **EP 2 013 040 B1**
(45) Veröffentlichungstag und Bekanntmachung des Hinweises auf die Patenterteilung: **07.12.2011**
(21) Anmeldenummer: 07728582.3
(22) Anmeldetag: 27.04.2007
(51) Int. Cl.: B60D 1/64, B62D 53/12

(54) **KUPPLUNGSSYSTEM ZUM VERBINDEN VON VERSORGUNGSLEITUNGEN**
COUPLING SYSTEM FOR CONNECTING SUPPLY LINES
SYSTEME D'ACCOUPLEMENT POUR RELIER DES CONDUITES D'ALIMENTATION

(30) Priorität: 29.04.2006 DE 102006020069
(43) Veröffentlichungstag der Anmeldung: 14.01.2009
(73) Patentinhaber: Jost-Werke GmbH, 63263 Neu-Isenburg (DE)
(72) Erfinder: ALGÜERA GALLEGO, José Manuel, 63739 Aschaffenburg (DE); EIERMANN, Michael, 64319 Pfungstadt (DE); RICHTER, Martin, 60389 Frankfurt (DE); SAUPE, Swen, 55122 Mainz (DE); STRÜTT, Achim, 64560 Riedstadt (DE)
(74) Vertreter: Mehler Achler
(86) Internationale Anmeldenummer: PCT/EP2007/054127
(87) Internationale Veröffentlichungsnummer: WO 2007/125085

(56) Entgegenhaltungen:
- WO-A-2005/110836
- DE-A1- 10 155 056
- US-A- 3 653 686
- US-A- 5 060 964

## Beschreibung

Die Erfindung betrifft ein Kupplungssystem zum Verbinden von Versorgungsleitungen zwischen einem Anhänger und einem Zugfahrzeug, umfassend eine an dem Zugfahrzeug angeordnete Steckerbuchse und ein an dem Auflieger angeordnetes Tragelement mit einem Stecker.

Die Versorgungsleitungen können zum Beispiel für die Übertragung von elektrischer Energie und/oder Druckluft vorgesehen sein, wobei der Anhänger ein Sattelauflieger oder ein beliebiges anderes Nachlauffahrzeug sein kann.

Kupplungssysteme sind in unterschiedlichen Ausführungen bekannt. Im einfachsten Fall handelt es sich um einen Stecker und eine Steckerbuchse, die jeweils an mehr oder weniger elastischen Leitungen befestigt sind. Nach dem mechanischen Verbinden von Anhänger und Zugfahrzeug ist es erforderlich, auch die Versorgungsleitungen miteinander zu verbinden. Hierzu muss eine Person von Hand den Stecker und die Steckerbuchse verbinden. Vor dem Abkuppeln des Anhängers muss das Kupplungssystem wieder getrennt werden. Wird dieses versehentlich vergessen, kommt es zu einem Auseinanderreißen des Kupplungssystems.

Es sind daher Bestrebungen im Gang, das Verbinden und Trennen der Kupplungssysteme einerseits zu automatisieren und andererseits sicherer zu machen.

Bei Sattelzügen wurde in der Vergangenheit daher bereits versucht, die Versorgungsleitungen durch den Königszapfen des Aufliegers zu führen, der im gekuppelten Zustand von Auflieger und Zugfahrzeug mit einem entsprechenden Gegenstück in der Sattelkupplung zusammenwirkt. Ein derartiges Kupplungssystem wird beispielsweise in der EP 0 816 211 A2 beschrieben. Diese Vorrichtung hat jedoch den Nachteil, dass der Querschnitt des Königszapfens nur eine begrenzte Anzahl an Versorgungsleitungen zulässt und der Königszapfen außerdem hinsichtlich seiner Festigkeit beeinträchtigt wird. Darüber hinaus besteht eine hohe Verschmutzungsgefahr insbesondere durch Schmierfett sowie darin haftende Feststoffe und ein Bauhöhenzuwachs aufgrund der auf der Steckerabführung unterhalb beziehungsweise oberhalb des Königszapfens.

Einen gattungsbildenden Stand der Technik offenbart die DE 101 55 056 A1, deren Steckkupplungssystem ein keilförmiges Tragelement mit einem Stecker umfasst, welches schwenkbar an dem Königszapfen des Aufliegers gelagert ist und sich bei angekuppeltem Auflieger in der Einfahröffnung der Sattelkupplung befindet. Nachfolgend wird dann aus einer Seitenwand der Einfahröffnung ein Aktuator mit einer daran angeordneten Steckerbuchse ausgefahren und mit dem Stecker des Tragelementes kontaktiert. Dieses System ist jedoch in einem Bereich der Sattelkupplung angeordnet, welcher bereits eine Vielzahl anderer Baukomponenten, insbesondere der Verschlussmechanik, aufnimmt. Dadurch ist es möglich, nur eine geringe Anzahl von Kontakten in dem Steckkupplungssystem unterzubringen, so dass beispielsweise die Druckluftleitungen nach wie vor von Hand angeschlossen werden müssen.

Aus diesem Grund liegt der Erfindung die Aufgabe zugrunde, ein robust arbeitendes Kupplungssystem bereitzustellen, bei dem ein automatisches Verbinden aller vorhandenen Versorgungsleitungen möglich ist.

Die Aufgabe wird mit einem Kupplungssystem gelöst, bei dem die Steckerbuchse ortsfest an dem Zugfahrzeug angeordnet, der Stecker lateral verschiebbar in dem Tragelement geführt und der Stecker mittels eines an dem Zugfahrzeug angeordneten Aktuators in eine Verbindungsstellung mit der Steckerbuchse bringbar ist.

Nach dem Ankuppeln des Anhängers verschiebt der an der Zugmaschine angeordnete Aktuator den Stecker in dem Tragelement bis zur Kontaktierung mit der Steckerbuchse. Der wesentliche Vorteil besteht darin, dass der Aktuator und die Steckerbuchse nicht unmittelbar im Verschlussbereich der Sattelkupplung bzw. im Einfahrmaul einer Anhängerkupplung angebracht sein müssen, sondern in Bereichen mit verhältnismäßig viel freiem Bauraum. Dadurch können der Stecker und die Steckerbuchse hinsichtlich ihrer Größe und Geometrie derart ausgelegt sein, dass alle Versorgungsleitungen darin untergebracht und gekuppelt werden können.

Vorteilhafterweise umfasst der Stecker einen Stößel, mit dem eine Druckstange des Aktuators in Wirkeingriff bringbar ist. Beim Ausfahren des Aktuators trifft die Druckstange auf den Stößel und schiebt diesen lateral in ihrer Bewegungsrichtung aus. Dabei wird ebenfalls der Stecker in Richtung der Steckerbuchse bewegt und trifft bei annähernd vollständig ausgefahrener Druckstange auf die Steckerbuchse.

Günstigerweise ist an dem Stecker und/oder der Steckerbuchse ein Rastelement angeordnet. Mit diesem kann der Stecker nach einer Kontaktierung mit der Steckerbuchse verrastet werden, wodurch ein unbeabsichtigtes Entkuppeln des Kupplungssystems vermieden wird. Ein weiterer Vorteil besteht darin, dass der Aktuator beziehungsweise die Druckstange nach dem Verbinden von Stecker und Steckerbuchse zurückgefahren werden kann. Dadurch wird in erheblichem Maße der betriebsbedingte Verschleiß verringert. In der vollständig zurückgefahrenen Position ragt der Aktuator beziehungsweise die Druckstange nicht mehr in das Tragelement hinein; so dass keine Abrissgefahr besteht, sofern es zu einem versehentlichen Abkuppeln des Aufliegers ohne vorheriges Trennen der Versorgungsleitungen kommt.

Vorzugsweise wirkt das Rastelement mit einem Entriegelungsaktuator zusammen, welcher ebenfalls an dem Zugfahrzeug angeordnet sein sollte. Mit Hilfe des Entriegelungsaktuators kann ferngesteuert das Rastelement freigegeben werden. Diese Freigabe kann beispielsweise mit der Verriegelungsstellung der Verschlussmechanik einer Sattelkupplung logisch verknüpft sein, derart, dass der Entriegelungsaktuator stets bei geöffneter Verschlussmechanik auch das Rastelement freigibt.

Dieses ist besonders vorteilhaft, wenn der Stecker in dem Tragelement federvorgespannt gelagert ist und nach der Freigabe des Rastelementes selbsttätig in das Tragelement zurückgezogen wird. Dieses hat den Vorteil, dass bei einem Abkuppeln des Anhängers keine Steckverbindung mehr besteht und dadurch auch die Abrissgefahr des Steckers beziehungsweise der Steckerbuchse ausgeschlossen ist.

Das Kupplungssystem kann besonders vorteilhaft an einer Sattelkupplung eines Zugfahrzeuges integriert sein, welche eine durch zwei seitliche Kupplungshörner gebildete Einfahröffnung aufweist. Das Tragelement kann schwenkbar an einem Königszapfen des Aufliegers anbringbar sein. Hierbei hat es sich als besonders günstig erwiesen, wenn die Steckerbuchse in dem ersten Kupplungshorn anbringbar ist. Hierfür ist insbesondere eine der gegenüberliegenden Seitenwände der Kupplungshörner geeignet.

In der zweiten, dem ersten gegenüberliegenden Kupplungshorn kann der Aktuator anbringbar sein. Um diesen beim An- und Abkuppeln des Aufliegers nicht zu beschädigen, sollte der Aktuator in seiner zurückgezogenen Position in der Seitenwand des zweiten Kupplungshorns versenkt sein und nicht in die Einfahröffnung hineinragen.

Eine besonders einfache Konstruktion wird erreicht, wenn der Aktuator, der Stecker und die Steckerbuchse in einer Achse zueinander ausgerichtet sind. Bei dieser Ausführungsform liegen alle für den Kupplungsvorgang relevanten Bauteile in einer Bewegungsrichtung.

Vorzugsweise ist die Achse quer oder schräg zur Fahrtrichtung ausgerichtet. Dabei können der Aktuator, der Stecker und die Steckerbuchse in einer Ebene unterhalb der Sattelkupplung angeordnet sein. Insbesondere unterhalb der Kupplungshörner ist bei den heute üblichen Sattelkupplungen bisher ungenutzter Bauraum vorhanden, der sich im Besonderen zur Installation des Kupplungssystems eignet.

Vorteilhafterweise fährt der Aktuator nach dem Herstellen der Verbindungsstellung in seine Ursprungsposition zurück und unterliegt dadurch im Fahrbetrieb kaum einem Verschleiß, wodurch das System noch robuster ist.

Nachfolgend wird die Erfindung zum besseren Verständnis anhand von 2 Figuren näher erläutert. Dabei zeigen die
- **Fig. 1a:**: eine schematische Draufsicht auf ein an einer Sattelkupplung angeordnetes Kupplungssystem gemäß einer ersten Ausführungsform vor dem Ankuppeln des Aufliegers;
- **Fig. 1b:**: eine Ansicht gemäß Fig. 1a mit angekuppeltem Auflieger vor Kontaktierung des Kupplungssystems;
- **Fig. 1c:**: eine Ansicht gemäß der Fign. 1a und 1b mit angekuppeltem Auflieger nach Kontaktierung des Kupplungssystems;
- **Fig. 2a:**: eine schematische Draufsicht auf ein an einer Sattelkupplung angeordnetes Kupplungssystem gemäß einer zweiten Ausführungsform vor dem Ankuppeln des Aufliegers;
- **Fig. 2b:**: eine Ansicht gemäß Fig. 2a mit angekuppeltem Auflieger vor Kontaktierung des Kupplungssystems;
- **Fig. 2c:**: eine Ansicht gemäß der Fign. 2a und 2b mit angekuppeltem Auflieger nach Kontaktierung des Kupplungssystems;

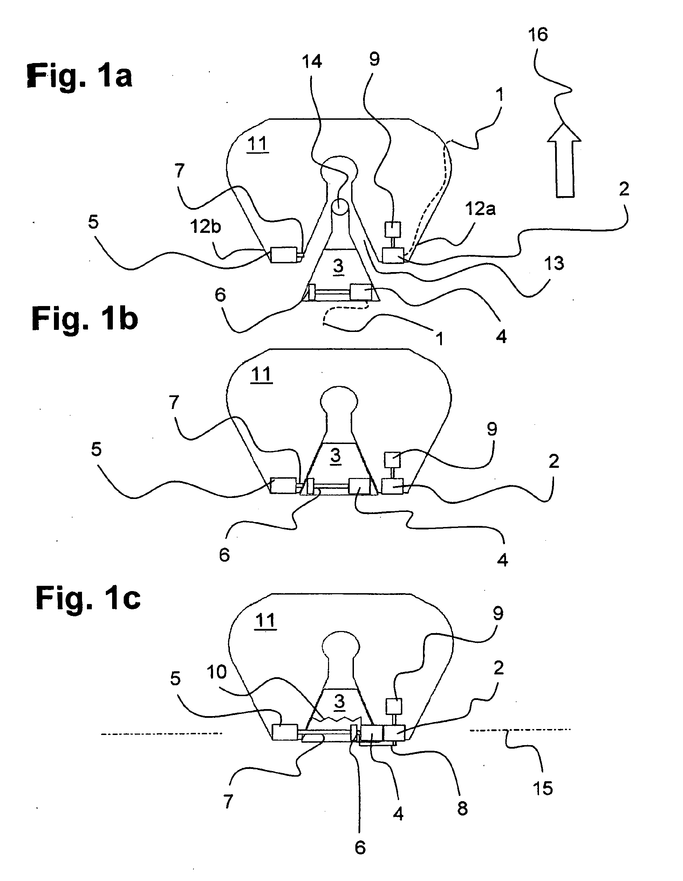

Die Figur 1 zeigt eine Draufsicht auf eine Sattelkupplung 11 unmittelbar vor dem Ankuppeln eines Königszapfens 14. Während des Ankuppelns fährt das nicht weiter dargestellte Zugfahrzeug, welches die Sattelkupplung 11 trägt, rückwärts entgegen der Fahrtrichtung 16. Um das Einführen des Königszapfens 14 in die Sattelkupplung 11 zu vereinfachen, weist die Sattelkupplung 11 in ihrem hinteren Bereich eine keilförmige Einfahröffnung 13 auf, die beidseitig durch zwei Kupplungshörner 12a, 12b begrenzt ist.

An dem Königszapfen 14 ist schwenkbar ein Tragelement 3 befestigt, welches in seiner Formgebung weit gehend an die Einfahröffnung 13 angepasst ist. In angekuppeltem Zustand ist der Königszapfen 14 in der Sattelkupplung 11 verriegelt, wobei während Kurvenfahrten des Zugfahrzeuges das Tragelement 3 um den Königszapfen 14 rotiert.

In einem ersten Kupplungshorn 12a befindet sich eine Steckerbuchse 2, welche an eine Versorgungsleitung 1 angeschlossen ist. Die Versorgungsleitung 1 ist schematisch als unterbrochene Linie dargestellt und umfasst im einzelnen Leitungen zur Übertragung von elektrischer Energie, Druckluft und gegebenenfalls auch hydraulischer Energie. Eine derartige Versorgungsleitung 1 ist ebenfalls an dem Auflieger zu erkennen. Diese verläuft ausgehend von einem in dem Tragelement 3 befindlichen Stecker 4 zu nicht gezeigten Verbrauchern auf dem Auflieger. Der Stecker 4 selbst ist lateral verschiebbar an dem Tragelement 3 angeordnet und schließt seitlich mit diesem ab. Die Bewegungsrichtung des Steckers 4 ist in der Ausführungsform gemäß den Figuren 1 a bis 1 c rechtwinklig zur Fahrtrichtung 16 ausgerichtet.

Das zweite Kupplungshorn 12b weist endseitig einen Aktuator 5 mit einer Druckstange 7 auf, die vor dem Ankuppeln des Aufliegers in einer zurückgefahrenen Stellung ausgerichtet ist und dabei nicht aus der dem Kupplungshorn 12a zugewandten Wand der Einfahröffnung 13 übersteht.

Für ein Zusammenwirken mit der Druckstange 7 des Aktuators 5 weist der Stecker 4 einen Stößel 6 auf, welcher das Tragelement 3 annähernd durchragt.

Die Figur 1b stellt eine Situation mit einem bereits vollständig in die Sattelkupplung 11 eingefahrenen Tragelement 3 dar. Der hier nicht gezeigte Königszapfen 14 (siehe Figur 1 a) ist mechanisch mit der Sattelkupplung verbunden. Die Druckstange 7 des Aktuators 5 und der Stößel 6 mit dem Stecker 4 sind unverändert in der Ausgangsstellung verblieben, wobei sich nunmehr die Druckstange 7 und der Stößel 6 unmittelbar gegenüberstehen.

In der Figur 1c sind der Stecker 4 und die Steckerbuchse 2 miteinander verbunden. Die Druckstange 7 ist vollständig aus dem Aktuator 5 herausgefahren und hat dadurch den Stößel 6 und den daran angreifenden Stecker 4 in Richtung der Steckerbuchse 2 verschoben und in Eingriff mit dieser gebracht. Die Druckstange 7, der Stecker 4 und die Steckerbuchse 2 liegen hierfür in einer Achse 15, rechtwinklig zur Fahrtrichtung 16.

Nach dem Verbinden von Stecker 4 und Steckerbuchse 2 hintergreift ein Rastelement 8 den Stecker 4 und hält diesen fest. Die Druckstange 7 verfährt vorzugsweise nach dem Herstellen der Verbindung in eine geschützte Stellung innerhalb des Kupplungshorns 12b (siehe Figur 1 a) zurück. Zum Einleiten des Absattelvorganges ist in dem Kupplungshorn 12a (siehe Figur 1 a) ein Entriegelungsaktuator 9 vorgesehen, der auf das Rastelement 8 einwirkt und den Stecker 4 freigibt. Das Auslösen des Entriegelungsaktuators 9 kann an die Öffnungsstellung der Verschlussmechanik der Sattelkupplung 11 gekuppelt sein. Nach einem Lösen des Rastelementes 8 verfährt der Stecker 4 selbsttätig zurück in das Tragelement 3. Hierfür ist in dem Tragelement 3 ein Federelement 10 in Form einer Zugfeder vorgesehen.

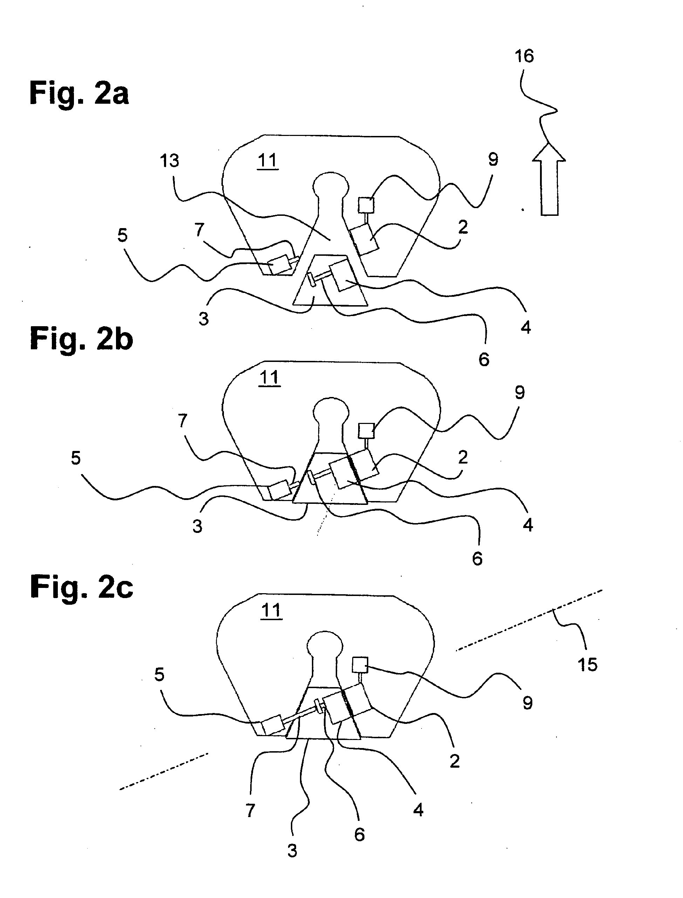

Die Figuren 2a bis 2b zeigen eine alternative Einbauposition des Kupplungssystems an der Sattelkupplung 11 beziehungsweise dem Tragelement 3, bei welcher der Aktuator 5, der Stößel 6 mit dem Stecker 4 und die Steckerbuchse 2 in einer Achse 15 (Figur 2c) schräg zu der Fahrtrichtung 16 angeordnet sind. Dabei steht die Achse 15 rechtwinklig zu einer Wand der Einfahröffnung 13 und die Kontakte der Steckerbuchse 2 sind ebenfalls rechtwinklig zu einer der gegenüberliegenden schrägen Wände der Einfahröffnung 13 ausgerichtet. Aufgrund der zu der Einfahröffnung 13 komplementären Form des Tragelementes 3 ist auch der Stecker 4 gegenüber der Fahrtrichtung 16 in gleichem Winkel entsprechend der Steckerbuchse 3 angeordnet. Daraus ergibt sich eine zur Fahrtrichtung 16 geneigte Ausrichtung des Aktuators 5, über dessen Druckstange 7 dann ein Verfahren des Steckers 4 durch das Tragelement 3 hindurch erfolgen kann.

### Bezugszeichenliste

- 1: Versorgungsleitungen
- 2: Steckerbuchse
- 3: Tragelement
- 4: Stecker
- 5: Aktuator
- 6: Stößel
- 7: Druckstange
- 8: Rastelement
- 9: Entriegelungsaktuator
- 10: Federelement
- 11: Sattelkupplung
- 12a, b: Kupplungshörner
- 13: Einfahröffnung
- 14: Königszapfen
- 15: Achse
- 16: Fahrtrichtung

## Patentansprüche

1. Kupplungssystem zum Verbinden von Versorgungsleitungen (1) zwischen einem Anhänger und einem Zugfahrzeug, umfassend eine an dem Zugfahrzeug angeordnete Steckerbuchse (2) und ein an dem Anhänger angeordnetes Tragelement (3) mit einem Stecker (4),
**dadurch gekennzeichnet,**
- **dass** die Steckerbuchse (2) ortsfest an dem Zugfahrzeug angeordnet,
- **dass** der Stecker (4) lateral verschiebbar in dem Tragelement (3) geführt und
- **dass** der Stecker (4) mittels eines an dem Zugfahrzeug angeordneten Aktuators (5) in eine Verbindungsstellung mit der Steckerbuchse (2) bringbar ist.

2. System nach Anspruch 1, **dadurch gekennzeichnet, dass** der Stecker (4) einen Stößel (6) umfasst, mit dem eine Druckstange (7) des Aktuators (5) in Wirkeingriff bringbar ist.

3. System nach Anspruch 1 oder 2, **dadurch gekennzeichnet, dass** an dem Stecker (4) und/oder der Steckerbuchse (2) ein Rastelement (8) angeordnet ist.

4. System nach Anspruch 2, **dadurch gekennzeichnet, dass** das Rastelement (8) mit einem Entriegelungsaktuator (9) zusammenwirkt.

5. System nach einem der Ansprüche 1 bis 4, **dadurch gekennzeichnet, dass** zwischen dem Stecker (4) und dem Tragelement (3) ein Federelement (10) angeordnet ist.

6. System nach einem der Ansprüche 1 bis 5, wobei das Zugfahrzeug eine Sattelkupplung (11) mit einer durch zwei seitliche Kupplungshörner (12a, 12b) gebildete Einfahröffnung (13) und der Anhänger einen Königszapfen (14) aufweist, an welchem schwenkbar das Tragelement (3) anbringbar ist, **dadurch gekennzeichnet, dass** die Steckerbuchse (2) in dem ersten Kupplungshorn (12a) anbringbar ist.

7. System nach Anspruch 6, **dadurch gekennzeichnet, dass** der Aktuator (5) an dem zweiten, dem ersten gegenüberliegenden Kupplungshorn (12b) anbringbar ist.

8. System nach einem der Ansprüche 1 bis 7, **dadurch gekennzeichnet, dass** der Aktuator (5), der Stecker (4) und die Steckerbuchse (2) in einer Achse (15) zueinander ausgerichtet sind.

9. System nach Anspruch 8, **dadurch gekennzeichnet, dass** die Achse (15) quer oder schräg zur Fahrtrichtung (16) ausgerichtet ist.

10. System nach einem der Ansprüche 6 bis 9, **dadurch gekennzeichnet, dass** der Aktuator (5), der Stecker (4) und die Steckerbuchse (2) in einer Ebene unterhalb der Sattelkupplung (11) angeordnet sind.

11. System nach einem der Ansprüche 1 bis 10, **dadurch gekennzeichnet, dass** der Aktuator (5) nach dem Herstellen der Verbindungsstellung in seine Ursprungsposition zurückfährt.

## Claims

1. Coupling system for connecting supply lines (1) between a trailer and a tractor vehicle, comprising a socket (2) which is arranged on the tractor vehicle and a support element (3) which is arranged on the trailer and has a plug (4),
**characterised in**
- **that** the socket (2) is arranged in a stationary manner on the tractor vehicle,
- **that** the plug (4) is guided in a laterally displaceable manner in the support element (3) and
- **that** the plug (4) can be brought into a connecting position with the socket (2) by means of an actuator (5) which is arranged on the tractor vehicle.

2. System according to Claim 1, **characterised in that** the plug (4) comprises a ram (6) with which a push rod (7) of the actuator (5) can be brought into active engagement.

3. System according to Claim 1 or 2, **characterised in that** a locking element (8) is arranged on the plug (4) and/or the socket (2).

4. System according to Claim 2, **characterised in that** the locking element (8) interacts with an unlocking actuator (9).

5. System according to any one of Claims 1 to 4, **characterised in that** a spring element (10) is arranged between the plug (4) and the support element (3).

6. System according to any one of Claims 1 to 5, wherein the tractor vehicle has a fifth wheel coupling (11) with an introduction opening (13) formed by two lateral coupling horns (12a, 12b), and the trailer has a king pin (14) to which the support element (3) can be fitted in a pivotable manner, **characterised in that** the socket (2) can be fitted in the first coupling horn (12a).

7. System according to Claim 6, **characterised in that** the actuator (5) can be fitted to the second coupling horn (12b) lying opposite the first one.

8. System according to any one of Claims 1 to 7, **characterised in that** the actuator (5), the plug (4) and the socket (2) are oriented along the same axis (15) as one another.

9. System according to Claim 8, **characterised in that** the axis (15) is oriented transversely or at a slant to the direction of travel (16).

10. System according to any one of Claims 6 to 9, **characterised in that** the actuator (5), the plug (4) and the socket (2) are arranged in one plane below the fifth wheel coupling (11).

11. System according to any one of Claims 1 to 10, **characterised in that** the actuator (5) travels back into its original position after the connection position has been established.

## Revendications

1. Système d'accouplement pour relier des conduites d'alimentation (1) entre une remorque et un véhicule tracteur, comprenant une douille enfichable (2) disposée sur le véhicule tracteur et un élément porteur (3) disposé sur la remorque avec un raccord male (4), **caractérisé en ce que** la douille enfichable (2) est disposée de façon fixe sur le véhicule tracteur, **en ce que** le raccord male (4) est guidé en pouvant coulisser latéralement dans l'élément porteur (3) et **en ce que** le raccord male (4) peut être amené à l'aide d'un actionneur (5), disposé sur le véhicule tracteur, dans une position de liaison avec la douille enfichable (2).

2. Système selon la revendication 1, **caractérisé en ce que** le raccord male (4) comprend un coulisseau (6), avec lequel une tige de compression (7) de l'actionneur (5) peut être amenée en engagement actif.

3. Système selon les revendications 1 ou 2, **caractérisé en ce qu'**un élément d'arrêt (8) est disposé sur le raccord male (4) et/ou la douille enfichable (2).

4. Système selon la revendication 2, **caractérisé en ce que** l'élément d'arrêt (8) interagit avec un actionneur de déverrouillage (9).

5. Système selon l'une des revendications 1 à 4, **caractérisé en ce qu'**entre le raccord male (4) et l'élément porteur (3) est disposé un élément élastique (10).

6. Système selon l'une des revendications 1 à 5, dans lequel l'élément tracteur présente une sellette (11) avec une ouverture de positionnement(13) formée par deux bras d'attelage latéraux (12a, 12b) et la remorque présente un pivot conique (14), sur lesquels l'élément porteur (3) peut être placé de façon pivotante, **caractérisé en ce que** la douille enfichable (2) peut être placée dans le premier bras d'attelage (12a).

7. Système selon la revendication 6, **caractérisé en ce que** l'actionneur (5) peut être placé sur le deuxième bras d'attelage (12b) situé en face du premier.

8. Système selon l'une des revendications 1 à 7, **caractérisé en ce que** l'actionneur (5), le raccord male (4) et la douille enfichable (2) sont orientés l'un par rapport à l'autre dans un axe (15).

9. Système selon la revendication 8, **caractérisé en ce que** l'axe (15) est orienté transversalement ou à l'oblique par rapport au sens de la marche (16).

10. Système selon l'une des revendications 6 à 9, **caractérisé en ce que** l'actionneur (5), le raccord male (4) et la douille enfichable (2) sont disposés dans un plan situé au-dessous de la sellette.

11. Système selon l'une des revendications 1 à 10, **caractérisé en ce que** l'actionneur (5) retourne dans sa position d'origine après l'établissement de la position de liaison.
